# EUROPÄISCHE PATENTSCHRIFT

(11) **EP 1 053 124 B1**
(45) Veröffentlichungstag und Bekanntmachung des Hinweises auf die Patenterteilung: **28.08.2002**
(21) Anmeldenummer: 98966791.0
(22) Anmeldetag: 19.12.1998
(51) Int. Cl.: B60P 3/025

(54) **ENTFALTBARE DACHKONSTRUKTION**
COLLAPSIBLE ROOF CONSTRUCTION
ENSEMBLE TOIT DEPLOYABLE

(30) Priorität: 05.02.1998 DE 19804435
(43) Veröffentlichungstag der Anmeldung: 22.11.2000
(73) Patentinhaber: Merz Sauter Zimmermann GmbH, 70180 Stuttgart (DE)
(72) Erfinder: MERZ, Hans-Günter, D-70174 Stuttgart (DE); SAUTER, Sabine, D-70182 Stuttgart (DE)
(74) Vertreter: KOHLER SCHMID + PARTNER
(86) Internationale Anmeldenummer: DE9803736
(87) Internationale Veröffentlichungsnummer: WO99039937

(56) Entgegenhaltungen:
- FR-A- 2 145 551
- FR-A- 2 535 658
- FR-A- 2 677 066
- US-A- 1 840 745
- US-A- 4 244 384
- US-A- 5 478 129

## Beschreibung

Die vorliegende Erfindung betrifft eine Dachkonstruktion, insbesondere freitragende Dachkonstruktion, mit mehreren, eine aufgespannte Dachhaut tragenden, aufgerichteten Stützbögen, deren jeweilige zwei Enden im tragenden Zustand festbeabstandet zueinander gehalten sind, wobei jeder Stützbogen durch mehrere, jeweils miteinander über Gelenke verbundene Teilstücke aufgebaut ist.

Eine derartige Dachkonstruktion ist beispielsweise durch die **US-A-4,244,384** bekanntgeworden.

Es sind Dachkonstruktionen z.B. bei Zelten bekannt, bei denen das Zeltdach über rohrförmige Stützbögen abgestützt und in Form gehalten wird. Solche Stützbögen werden meist vor Ort aus mehreren Teilstücken zusammengesteckt und aufgerichtet und können bei entsprechender Verankerung, z.B. am Zeltboden, das Zeltdach aufgrund ihrer Biegesteifigkeit stützend tragen.

Aus der eingangs genannten US-A-4,244,384 ist eine modular aufgebaute, freitragende Dachkonstruktion bekannt, deren Dachhaut von mehreren aufgerichteten Stützbögen getragen wird. Am Boden der Dachkonstruktion sind zwei Verankerungen vorgesehen, an denen die Enden aller Stützbögen abgestützt sind. Jeder Stützbogen ist durch mehrere Teilstücke aufgebaut, die jeweils über Gelenke verbunden sind. Für einen Transport wird jeder Stützbogen aus den Verankerungen gelöst und jeweils in zwei miteinander noch gelenkig verbundene Teilstücke zerlegt, die über ihr Gelenk zusammengefaltet werden. Vor Ort müssen die Teilstücke wieder zu Stützbögen zusammengebaut werden. Diese Dachkonstruktion erfordert somit aufwendige Montage- und Demontagearbeiten, die mit hohem zeitlichen Aufwand verbunden sind.

Es ist daher die Aufgabe der vorliegenden Erfindung, eine Dachkonstruktion der eingangs genannten Art derart weiterzubilden, daß bei gleichzeitig schnellem und einfachem Ab- und Aufbau auch Dachkonstruktionen mit relativ langen Stützbögen sicher getragen werden können.

Diese Aufgabe wird erfindungsgemäß dadurch gelöst, daß im tragenden Zustand des Stützbogens alle seine Gelenke jeweils durch unterspannte Zugverbindungen überbrückt sind, die jeweils zu beiden Seiten des überbrückten Gelenks an einem Teilstück angreifen, wobei jedem Gelenk eine Sperre zugeordnet ist, welche das Aufklappen benachbarter Teilstücke auf etwa ihre Strecklage begrenzt, und daß im Bereich jedes Gelenks ein zwischen dem Stützbogen und der jeweiligen Zugverbindung wirkender Abstandshalter vorgesehen ist, der die jeweilige Zugverbindung nach innen über die durch die beiden Angriffspunkte definierte Verbindungslinie hinaus auslenkt.

Diese Dachkonstruktion hat den wesentlichen Vorteil, daß die Stützbögen sich über ihre Gelenke leicht zusammenklappen lassen und so vor Ort in ihre vorzugsweise bogenförmige Endlage durch Aufklappen aufgerichtet werden können. Damit ein aufgerichteter Stützbogen nicht aufgrund seines und des Gewichts der auf ihm lastenden Dachhaut in sich zusammenfällt, ist jede unterspannte Zugverbindung durch den Abstandshalter von dem ihr zugeordneten Gelenk soweit nach innen beabstandet, daß die zwischen zwei Angriffspunkten am Stützbogen wirkende Zugkraft am Abstandshalter auch eine nach außen in Richtung auf das Gelenk gerichtete Komponente aufweist, die die auf das Gelenk nach innen wirkenden Kräfte aufnehmen kann. Durch das Auf- und Zusammenklappen der Stützbögen kann die erfindungsgemäße Dachkonstruktion weiterhin schnell und einfach auf- und abgebaut werden.

Bei bevorzugten Ausführungsformen der Erfindung sind, um die Dachkonstruktion in Längsrichtung auszusteifen, die aufgerichteten Stützbögen in Längsrichtung der Dachkonstruktion hintereinander bzw. paarweise hintereinander angeordnet, wobei sich benachbarte aufgerichtete Stützbögen jeweils paarweise gegenseitig abstützen.

Dabei können sich benachbarte aufgerichtete Stützbögen entweder paarweise im Scheitelbereich, einander abstützend, überkreuzen, oder sie liegen, was eine bevorzugte Weiterbildung darstellt, jeweils im Scheitelbereich paarweise aneinander an. Im letzteren Fall wird die Dachkonstruktion bzw. die Dachhaut über die Scheitel der sich paarweise berührenden Stützbögen in Längsrichtung ausgesteift.

In weiterer bevorzugter Ausführungsform sind die zwei Enden eines Stützbogens jeweils an nach außen bewegbaren, vorzugsweise herabklappbaren Abschnitten befestigt, insbesondere angelenkt. Durch Umklappen der Abschnitte, die den Abstand zwischen den beiden Enden des Stützbogens bestimmen, vergrößert sich dieser Abstand, wodurch die Teilstücke des Stützbogens, wenn sie z.B. faltenbalgartig zusammengeklappt sind, zumindest teilweise in Richtung auf dessen gestreckte bzw. bogenförmige Endlage entfaltet werden können. Vorzugsweise handelt es sich bei den nach außen umklappbaren Abschnitten um Seitenwände oder Deckenteile eines Fahrzeugaufbaus.

Als vorteilhafte Weiterbildung dieser Ausführungsform ist vorgesehen, daß nach außen bewegte, vorzugsweise herabgeklappte und in diesem Zustand festgestellte Abschnitte jeweils einen Boden der Dachkonstruktion bilden. Dies hat den Vorteil, daß nicht nur die Teilstücke eines Stützbogens, sondern auch zumindest ein Teil des Bodens klappbar ausgebildet ist. Dadurch kann der von der Dachkonstruktion zusammen mit ihrem Boden im zusammengeklappten Zustand beanspruchte Raum besonders klein gehalten werden.

Bei ganz besonders bevorzugten Weiterbildungen sind Teilstücke eines Stützbogens, vorzugsweise alle seine Teilstükke, zwischen hochgestellte Abschnitte zusammenklappbar. Durch Bewegen bzw. Herabklappen der Abschnitte nach außen lassen sich dann diese, insbesondere faltenbalgartig zusammengeklappten Teilstücke eines Stützbogens nach außen in Richtung auf den aufgerichteten Stützbogen auseinanderziehen und entfalten. In seine vollständig aufgerichtete Endlage kann der Stützbogen dann beispielsweise von einer Person manuell überführt werden, durch die auch das Ausbilden der einzelnen Zugverbindungen veranlaßt werden kann.

Bei ganz besonders bevorzugten Ausführungsformen der erfindungsgemäßen Dachkonstruktion sind die an einem Stützbogen vorgesehenen Zugeinrichtungen durch ein einziges gemeinsames Zugseil gebildet. Wenn der Stützbogen teilweise oder bereits vollständig in seine aufgeklappte Endposition entfaltet worden ist, wird dieses alle Teilstücke eines Stützbogens unterspannende Zugseil angezogen, wodurch die einzelnen Teilstücke in ihre Endlage, in der sie ihr Eigengewicht und das Gewicht der Dachhaut tragen können, gespannt werden. Durch die Abstandshalter ist das Zugseil im Bereich der Gelenke jeweils nach innen umgelenkt. Das Zugseil ist vorzugsweise in entsprechenden Führungen an den Teilstücken und an den Abstandshaltern gehalten, und zwar auch im zusammengeklappten Zustand des Stützbogens. Zum Beispiel mittels einer hydraulischen Zugeinrichtung, die an einem Ende des Zugseils angreift, kann dieses angezogen und gespannt werden.

Die Teilstücke sind, insbesondere durch Glasmaterial, faserverstärkt oder vollständig aus Glasfasermaterial gebildet, um die Zug- und Biegefestigkeit sowie die Formbeständigkeit und Stabilität der Teilstücke bzw. des aufgerichteten Stützbogens zu erhöhen. Die Verwendung von Fibermaterial für die Teilstücke hat gegenüber starren Teilstücken den weiteren Vorteil, daß sich der Stützbogen an die Kontur der aufgespannten Dachhaut besser anpassen kann.

Die Dachhaut ist vorzugsweise dauerhaft mit den Stützbögen verbunden und läßt sich daher mit ihnen sowohl, z.B. faltenbalgartig, zusammenfalten als auch entfalten. Die Dachhaut ist bevorzugt als lichtdurchlässige Membran ausgebildet, um den von der Membran überspannten Innenraum mit Tageslicht zu erhellen.

Bei ganz besonders bevorzugten Ausführungsformen der Erfindung ist der Boden der Dachkonstruktion durch eine Ladefläche und durch auf deren Niveau nach außen abklappbare Abschnitte eines Fahrzeugs, insbesondere durch Seitenwände eines Lastkraftwagens gebildet. Zum Beispiel als Aufbau auf einem LKW kann die Dachkonstruktion dann als mobile Einheit flexibel und variabel genutzt werden. Durch eine Transformation am Fahrzeug kann diese fahrbare Einheit schnell zum Beispiel zu einer überdachten, temporären Ausstellungsfläche verwandelt werden.

Als vorteilhafte Weiterbildung dieser Ausführungsform kann noch ein Unterbau vorgesehen sein, der den Boden der Dachkonstruktion etwa auf dem Niveau der Ladefläche des Fahrzeugs abstützt. Dieser Unterbau kann z.B. durch Bodenstützen gebildet sein, die die abgeklappten Seitenwände des Fahrzeugs abstützen. Wenn zusätzlich auch die Ladefläche durch einen geeigneten Unterbau abgestützt ist, kann das Fahrzeug, wenn der Boden der Dachkonstruktion ausgebildet und abgestützt ist, von Ladefläche und Seitenwänden abgekoppelt und unter diesen entfernt werden.

Wenn die unterspannte Dachkonstruktion von innen für einen Betrachter nicht sichtbar sein soll, so kann bei aufgerichteter Dachkonstruktion an den Stützbögen, und zwar insbesondere an den Abstandshaltern, eine textile Innenbespannung hängend gehalten sein.

Die vorliegende Erfindung betrifft auch ein Fahrzeug mit einer Ladefläche und mit einer diese Ladefläche im entfalteten Zustand überdachenden Dachkonstruktion, wie sie oben beschrieben ist. Zum Beispiel als Aufbau auf einem Fahrzeug kann die Dachkonstruktion als mobile Einheit flexibel und variabel genutzt werden, insbesondere für eine reisende Ausstellung. Durch eine Transformation am Fahrzeug kann diese fahrbare Einheit schnell z.B. zu einer überdachten, temporären Ausstellungsfläche verwandelt und somit variabel in eine Stadtlandschaft eingebettet werden.

Indem sich die Dachkonstruktion zwischen zwei hochgestellte, insbesondere hochstellbare Seitenwände des Fahrzeugs zusammenfalten läßt, kann ein solches Fahrzeug schnell in einen überdachten Raum transformiert werden. Dabei kann, wie oben beschrieben, durch Abklappen der Seitenwände das Entfalten der Dachkonstruktion eingeleitet werden.

Bei einer weiteren vorteilhaften Ausführungsform des erfindungsgemäßen Fahrzeugs sind die beiden äußeren Teilstücke eines Stützbogens jeweils an Deckenteilen angelenkt, welche ihrerseits am Fahrzeug beweglich, vorzugsweise klappbar angelenkt sind. Diese Deckenteile, die bei zusammengeklappter Dachkonstruktion z.B. das Fahrzeugdach bilden können, können ihrerseits an abklappbaren Seitenwänden des Fahrzeugs angelenkt sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt :
- Fign. 1a-1d: den Bewegungsablauf der als Aufbau eines LKWs ausgebildeten erfindungsgemäßen Dachkonstruktion bei ihrem Entfalten aus einer vollständig zusammengeklappten Lage (Fig. 1a) in ihre vollständig entfaltete Endlage (Fig. 1d), jeweils in einer Rückansicht des LKWs;
- Fig. 2a: eine Seitenansicht des LKWs mit vollständig entfalteter Dachkonstruktion; und
- Fig. 2b: eine Draufsicht von oben auf die in Fig. 2a gezeigte Dachkonstruktion.

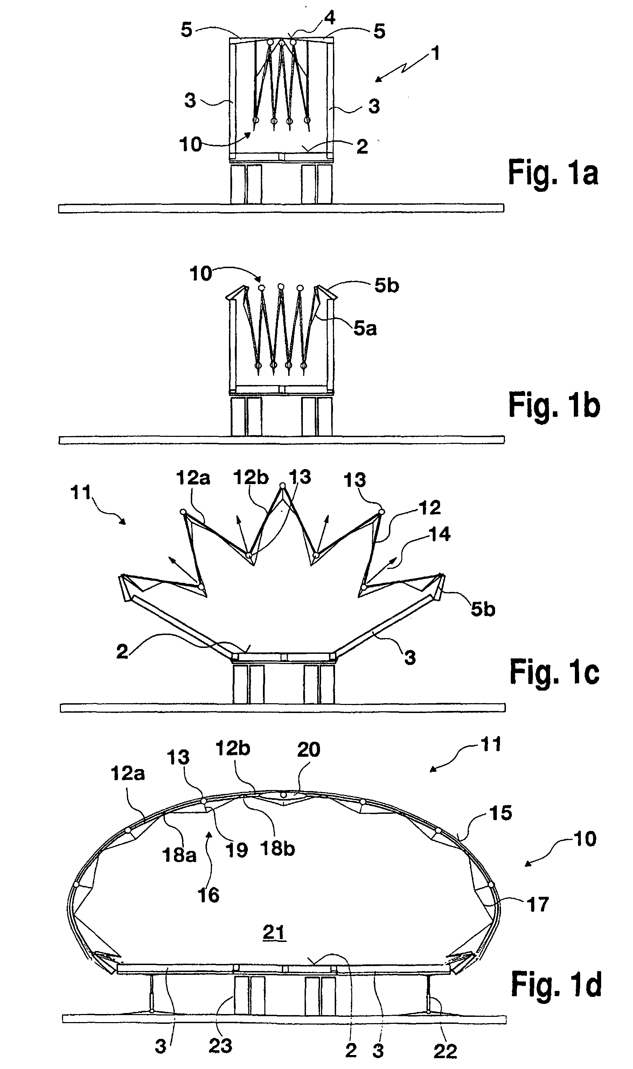

In **Fig. 1a** ist mit **1** ein LKW gezeigt, dessen in sich geschlossener Aufbau eine Ladefläche **2**, Seitenwände **3** und ein LKW-Dach **4** umfaßt. In diesem Aufbau ist zwischen die beiden Seitenwände **3** eine Dachkonstruktion **10** zusammengeklappt bzw. faltenbalgartig zusammengefaltet, die seitlich an zwei Dachhälften **5** des LKW-Daches 4 hängend gehalten ist.

Der Bewegungsablauf zum Entfalten der in Fig. 1a dargestellten Dachkonstruktion 10 wird im folgenden anhand den Fign. 1b bis 1d erläutert. Der Entfaltungsvorgang wird eingeleitet, indem sich das LKW-Dach 4 öffnet. Jede Dachhälfte 5 ist durch zwei gelenkig miteinander verbundene Dachteile **5a**, **5b** gebildet, wobei das innere Dachteil 5a nach unten und gleichzeitig das an der Seitenwand 3 drehbar gelagerte äußere Dachteil 5b nach außen klappen. Dadurch vergrößert sich der Abstand zwischen den beiden äußeren Dachteile 5b, so daß die jeweils zwischen den beiden Dachteilen 5a und 5b hängend gehaltene Dachkonstruktion 10 angehoben und etwas auseinandergezogen, d.h. etwas entfaltet wird (**Fig. 1b**).

Spätestens wenn das LKW-Dach 4 vollständig geöffnet ist, werden die hochgestellten Seitenwände 3 nach außen abgeklappt. Dadurch vergrößert sich der Abstand zwischen den beiden äußeren Dachteilen 5b, und die Dachkonstruktion 10 wird weiter auseinandergezogen bzw. entfaltet (**Fig. 1c**).

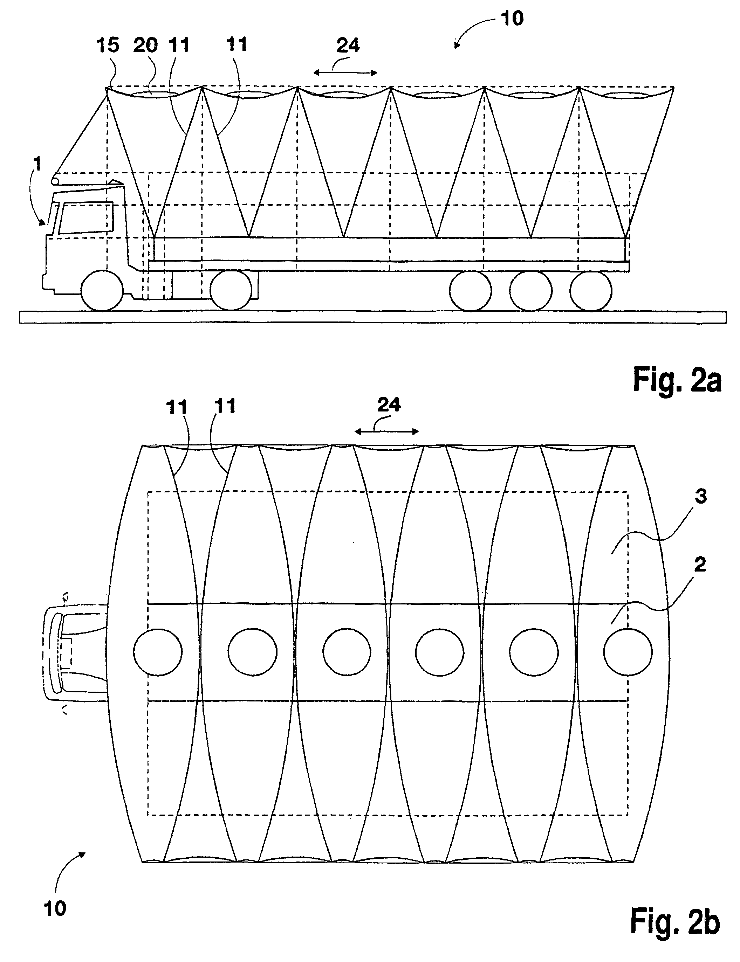

Die Dachkonstruktion 10 selbst weist mehrere in Längsrichtung 24 (Fig. 2) des LKWs 1 hintereinander angeordnete, jeweils faltenbalgartig zusammenklappbare Stützbögen **11** auf. Jeder Stützbogen **11** ist durch mehrere Teilstücke **12** gebildet, die kettenförmig miteinander über Gelenke **13** verbunden sind. Die beiden äußeren Teilstücke 12 jedes Stützbogens 11 sind jeweils an den äußeren Dachteilen 5b angelenkt.

Wenn die Dachkonstruktion 10 bzw. ihre Stützbögen 11 durch Abklappen der beiden Seitenwände 3 in die in Fig. 1c gezeigte Stellung überführt sind, werden, wie durch die Pfeile **14** angedeutet ist, die innenliegenden Gelenke 13 des Stützbogens 11 z.B. von einer auf der Ladefläche 2 stehenden Person nach außen gedrückt und damit benachbarte Teilstücke 12 auseinandergeklappt. Jedem Gelenk 13 ist eine Sperre (nicht dargestellt) zugeordnet, welche das Aufklappen benachbarter Teilstücke 12 auf etwa ihre Strecklage begrenzt.

In dieser Strecklage ergänzen sich dann, wie **Fig. 1d** zeigt, die einzelnen Teilstücke 12 zu einem aufgerichteten Stützbogen 11, der als Auflager für eine aufgespannte Dachhaut **15** dient. Weiterhin sind die beiden Seitenwände 3 auf das Niveau der Ladefläche 2 heruntergeklappt. In diesem aufgerichteten Zustand des Stützbogens 11 sind alle seine Gelenke 13 jeweils durch unterspannte Zugverbindungen **16** überbrückt, die das Zurückklappen der Teilstücke 12 in Richtung auf ihre zusammengeklappte Lage verhindern.

Im dargestellten Ausführungsbeispiel sind alle Zugverbindungen 16 eines Stützbogens 11 durch ein einziges, alle Teilstücke 12 und Gelenke 13 unterspannendes Zugseil **17** gebildet. Das Zugseil 17 greift zu beiden Seiten jedes Gelenks 13 an den beiden jeweils angrenzenden Teilstücken 12a, 12b bei **18a** bzw. bei **18b** an und ist dazwischen nach innen über die Verbindungslinie zwischen beiden Angriffspunkte 18a, 18b ausgelenkt. Dazu dient ein am Gelenk 13 vorgesehener Abstandshalter **19**, der das Zugseil 17 nach innen auslenkt. Die zwischen den beiden Angriffspunkten 18a, 18b wirkende Zugkraft des gespannten Zugseils 17 führt aufgrund der Auslenkung am Abstandshalter 19 und daher auch am Gelenk 13 zu einer nach außen gerichteten Kraftkomponente, die die auf das Gelenk 13 wirkenden Gewichtskräfte aufnimmt bzw. kompensiert. Die zum Spannen des Zugseils 17 erforderlichen Zugmittel, die z.B. hydraulischer Art sein können, sind in der Zeichnung nicht dargestellt.

Die Dachhaut 15 ist vorzugsweise eine faltbare Membran, die dauerhaft mit den Stützbögen 11 verbunden ist und sich mit diesen ent- und zusammenfalten läßt. Insbesondere läßt sie sich nach seitlichem Ausklappen der Seitenwände 3 über die Teilstücke 12 der Stützbögen 11 entfalten. Im Scheitelbereich der aufgerichteten Dachkonstruktion 10 weist die Dachhaut 15 lichtdurchlässige Bereiche **20** auf, durch die Tageslicht in den überdachten Innenraum **21** einfallen kann.

Über nicht gezeigte Mittel sind die Seitenwände 3 in ihrer auf das Niveau der Ladefläche 2 herabgeklappten Stellung festgestellt, so daß Ladefläche 2 und Seitenwände 3 eine ebene Plattform bilden. Bei einer 14 m langen Ladefläche 2 und bei einer Breite der Ladefläche 2 und Seitenwänden 3 von insgesamt 8,30 m beträgt die Bodenfläche der Plattform bereits ca. 116 m². Die herabgeklappten Seitenwände 3 sind über Bodenstützen **22** auf dem Niveau der Ladefläche 2 gehalten.

Wenn die Ladefläche 2 nicht durch die Räder **23** des LKWs 1, sondern ebenfalls über Bodenstützen abgestützt ist, kann der LKW 1 nach Abkoppeln seiner Ladefläche 2 und Seitenwände 3 unter der entfalteten Dachkonstruktion 10 durch Vorwärtsfahren entfernt werden.

In den **Fign. 2a** und **2b** ist die Seiten- bzw. Draufsicht auf die entfaltete Dachkonstruktion 10 gezeigt. Die Dachkonstruktion 10 ist durch mehrere in Längsrichtung 24 der Dachkonstruktion 10 hintereinander angeordnete Stützbögen 11 gebildet, die, um die Dachkonstruktion 10 in Längsrichtung **24** zu versteifen, jeweils paarweise in Richtung aufeinanderzu geneigt sind und im Scheitelbereich aneinander anliegen.

## Patentansprüche

1. Dachkonstruktion (10), insbesondere freitragende Dachkonstruktion, mit mehreren, eine aufgespannte Dachhaut (15) tragenden, aufgerichteten Stützbögen (11), deren jeweilige zwei Enden im tragenden Zustand festbeabstandet zueinander gehalten sind, wobei jeder Stützbogen (11) durch mehrere, jeweils miteinander über Gelenke (13) verbundene Teilstücke (12; 12a, 12b) aufgebaut ist,
**dadurch gekennzeichnet,**
**daß** im tragenden Zustand des Stützbogens (11) alle seine Gelenke (13) jeweils durch unterspannte Zugverbindungen (16) überbrückt sind, die jeweils zu beiden Seiten des überbrückten Gelenks (13) an einem Teilstück (12a, 12b) angreifen, wobei jedem Gelenk (13) eine Sperre zugeordnet ist, welche das Aufklappen benachbarter Teilstücke (12a, 12b) auf etwa ihre Strecklage begrenzt, und
**daß** im Bereich jedes Gelenks (13) ein zwischen dem Stützbogen (11) und der jeweiligen Zugverbindung (16) wirkender Abstandshalter (19) vorgesehen ist, der die jeweilige Zugverbindung (16) nach innen über die durch die beiden Angriffspunkte (18a, 18b) definierte Verbindungslinie hinaus auslenkt.

2. Dachkonstruktion nach Anspruch 1, **dadurch gekennzeichnet, daß** die aufgerichteten Stützbögen (11) in Längsrichtung (24) der Dachkonstruktion (10) hintereinander bzw. paarweise hintereinander angeordnet sind, wobei sich benachbarte aufgerichtete Stützbögen (11) jeweils paarweise gegenseitig abstützen.

3. Dachkonstruktion nach Anspruch 2, **dadurch gekennzeichnet, daß** zwei benachbarte aufgerichtete Stützbögen (11) jeweils im Scheitelbereich aneinander anliegen.

4. Dachkonstruktion nach einem der vorhergehenden Ansprüche, **dadurch gekennzeichnet, daß** die zwei Enden eines Stützbogens (11) jeweils an nach außen bewegbaren, vorzugsweise herabklappbaren Abschnitten (Seitenwände 3) befestigt, insbesondere angelenkt sind.

5. Dachkonstruktion nach Anspruch 4, **dadurch gekennzeichnet, daß** nach außen bewegte, vorzugsweise herabgeklappte und in diesem Zustand festgestellte Abschnitte (Seitenwände 3) jeweils einen Boden der Dachkonstruktion (10) bilden.

6. Dachkonstruktion nach Anspruch 4 oder 5, **dadurch gekennzeichnet, daß** Teilstücke (12) eines Stützbogens (11) zwischen hochgestellte Abschnitte (Seitenwände 3) zusammenklappbar sind.

7. Dachkonstruktion nach Anspruch 6, **dadurch gekennzeichnet, daß** durch Nachaußenbewegen, vorzugsweise Herabklappen, von Abschnitten (Seitenwände 3) die zusammengeklappten Teilstücke (12) eines Stützbogens (11) nach oben bzw. nach außen in Richtung auf den aufgeklappten Stützbogen (11) entfaltbar sind.

8. Dachkonstruktion nach einem der vorhergehenden Ansprüche, **dadurch gekennzeichnet, daß** die an einem Stützbogen (11) vorgesehenen Zugeinrichtungen (16) durch ein einziges gemeinsames Zugseil (17) gebildet sind.

9. Dachkonstruktion nach einem der vorhergehenden Ansprüche, **dadurch gekennzeichnet, daß** die Teilstücke (12), insbesondere durch Glasmaterial, faserverstärkt sind.

10. Dachkonstruktion nach einem der vorhergehenden Ansprüche, **dadurch gekennzeichnet, daß** die Dachhaut (15) als eine, insbesondere lichtdurchlässige Membran ausgebildet ist.

11. Dachkonstruktion nach einem der vorhergehenden Ansprüche, **dadurch gekennzeichnet, daß** der Boden der Dachkonstruktion (10) durch eine Ladefläche (2) und durch auf deren Niveau nach außen abklappbare Abschnitte eines Fahrzeugs, insbesondere durch Seitenwände (3) eines Lastkraftwagens (1), gebildet ist.

12. Dachkonstruktion nach Anspruch 11, **gekennzeichnet durch** einen den Boden der Dachkonstruktion (10) etwa auf dem Niveau der Ladefläche (2) des Fahrzeugs abstützenden Unterbau (Bodenstütze 22).

13. Dachkonstruktion nach einem der vorhergehenden Ansprüche, **dadurch gekennzeichnet, daß** bei aufgerichteter Dachkonstruktion (10) an den Stützbögen (11), insbesondere an den Abstandshaltern (19), eine Innenbespannung hängend gehalten ist.

14. Fahrzeug, insbesondere LKW (1), mit einer Ladefläche (2) und mit einer diese Ladefläche (2) im entfalteten Zustand überdachenden Dachkonstruktion (10) nach einem der vorhergehenden Ansprüche.

15. Fahrzeug nach Anspruch 14, **dadurch gekennzeichnet, daß** die Dachkonstruktion (10) zwischen zwei hochgestellte, insbesondere hochstellbare Seitenwände (3) des Fahrzeugs zusammenfaltbar ist.

16. Fahrzeug nach Anspruch 14 oder 15, **dadurch gekennzeichnet, daß** die beiden äußeren Teilstücke (12) eines Stützbogens (11) jeweils an Deckenteilen (5a, 5b) angelenkt sind, welche am Fahrzeug beweglich, vorzugsweise klappbar angelenkt sind.

## Claims

1. Roof construction (10), in particular a self-supporting roof construction, with several erected support arches carrying a tentered roof skin (15), both ends of which support arches are held with a fixed distance to one another in the carrying state, each support arch (11) being constituted by several sections (12; 12a, 12b) each connected to one another via joints (13),
**characterized in that**
in the carrying state of the support arch (11) all its joints (13) are bridged underneath by tensioned pulling connections (16), which engage on both sides of the bridged joint (13) on a section (12a, 12b), wherein a lock is assigned to each joint (13), which limits the unfolding of neighboring sections (12a, 12b) to about their straightened position, and
that in the region of each joint (13) (a spacer (19)) is provided acting between the support arch (11) and the corresponding pulling connection (16), which spacer (19) directs the pulling connection inwards past the connecting line defined by the two points (18a, 18b) of engagement.

2. Roof construction according to claim 1, **characterized in that** the erected support arches (11) are disposed in longitudinal direction (24) of the roof construction (10) behind one another or behind one another in pairs, wherein neighboring erected support arches (11) support each other in pairs.

3. Roof construction according to claim 2, **characterized in that** two neighboring erected support arches (11) touch each other in the crown area.

4. Roof construction according to any of the preceding claims, **characterized in that** the two ends of a support arch (11) are fixed, in particular hinged, to parts (side walls 3) which can be moved outwards, preferably can be hinged down.

5. Roof construction according to claim 4, **characterized in that** parts (side walls 3) moved outwards, preferably hinged down, and fastened in this state form a base of the roof construction (10).

6. Roof construction according to claim 4 or 5, **characterized in that** the sections (12) of a support arch (11) can be folded between parts (side walls 3) put upright.

7. Roof construction according to claim 6, **characterized in that** by moving outwards, preferably hinging down, of parts (side walls 3) the sections (12) folded together of a support arch (11) can be unfolded upwards or outwards towards the unfolded support arch (11).

8. Roof construction according to any of the preceding claims, **characterized in that** the pulling means (16) provided on a support arch (11) are formed by a single common pulling rope (17).

9. Roof construction according to any of the previous claims, **characterized in that** the sections (12) are fiber-enforced, in particular by glass material.

10. Roof construction according to any of the preceding claims, **characterized in that** the roof skin (15) is designed as a, in particular light permeable membrane.

11. Roof construction according to any of the preceding claims, **characterized in that** the base of the roof construction (10) is formed by a loading area (2) and by parts of a vehicle, in particular by side walls (3) of a lorry (1) which can be hinged down and outwards onto the level of the loading area (2).

12. Roof construction according to claim 11, **characterized by** a substructure (base support 22) supporting the base of the roof construction (10) about on the level of the loading area (2) of the vehicle.

13. Roof construction according to any of the preceding claims, **characterized in that** with the roof construction (10) being erected, an inner covering is held in a hanging fashion on the support arches (11), in particular on the spacers (19).

14. Vehicle, in particular lorry (1), with a loading area (2) and with a roof construction (10) roofing over this loading area (2) in the unfolded state according to any of the preceding claims.

15. Vehicle according to claim 14, **characterized in that** the roof construction (10) can be folded between two upright side walls (3), in particular side walls (3) which can be put upright.

16. Vehicle according to claim 14 or 15, **characterized in that** the two outer sections (12) of a support arch (11) are each hinged to ceiling parts (5a, 5b), which are hinged to the vehicle moveably, preferably flapably.

## Revendications

1. Construction de toiture (10), en particulier construction de toiture auto-portante, comportant plusieurs arcs de soutien (11) redressés portant une peau de toiture tendue (15), arcs dont les deux extrémités respectives sont maintenues à une distance fixe l'une par rapport à l'autre dans l'état portant, chaque arc de soutien (11) étant composé par plusieurs tronçons partiels (12 ; 12a, 12b) reliés entre eux via des articulations (13), **caractérisée en ce que** dans l'état portant de l'arc de soutien (11) toutes ses articulations (13) sont pontées chacune par des tirants de liaison tendus (16) qui attaquent chacun, des deux côtés de l'articulation pontée (13), un tronçon partiel (12a, 12b), un blocage étant associé à chaque articulation (13), qui limite le déploiement de tronçons partiels voisins (12a, 12b) approximativement vers leur position étendue, et **en ce que** dans la zone de chaque articulation (13) est prévu un élément d'écartement (19) qui agit entre l'arc de soutien (11) et un tirant de liaison respectif (16) et qui fait dévier le tirant de liaison respectif (16) vers l'intérieur au-delà de la ligne de liaison définie par les deux points d'attaque (18a, 18b).

2. Construction de toiture selon la revendication 1, **caractérisée en ce que** les arcs de soutien redressés (11) sont agencés les uns derrière les autres ou par paires les uns derrière les autres en direction longitudinale (24) de la construction de toiture (10), les arcs de soutien redressés voisins (11) se soutenant mutuellement par paire.

3. Construction de toiture selon la revendication 2, **caractérisé en ce que** deux arcs de soutien redressés voisins (11) sont en appui l'un contre l'autre dans la zone de sommet respective.

4. Construction de toiture selon l'une des revendications précédentes, **caractérisée en ce que** les deux extrémités d'un arc de soutien (11) sont fixées chacune, en particulier articulées, sur des tronçons (parois latérales 3) mobiles vers l'extérieur, de préférence rabattables vers le bas.

5. Construction de toiture selon la revendication 4, **caractérisée en ce que** des tronçons (parois latérales 3) déplacés vers l'extérieur, de préférence rabattus vers le bas et arrêtés dans cet état forment chacun un plancher de la construction de toiture (10).

6. Construction de toiture selon l'une ou l'autre des revendications 4 et 5, **caractérisée en ce que** des tronçons partiels (12) d'un arc de soutien (11) sont rabattables ensemble entre des tronçons redressés (parois latérales 3).

7. Construction de toiture selon la revendication 6, **caractérisée en ce que** les tronçons partiels rabattus ensemble (12) d'un arc de soutien (11) peuvent être dépliés vers le haut ou vers l'extérieur en direction des arcs de soutien déployés (11) par des mouvements de tronçons (parois latérales 3) vers l'extérieur, de préférence par un déploiement vers le bas.

8. Construction de toiture selon l'une des revendications précédentes, **caractérisée en ce que** les dispositifs de traction (16) prévus sur un arc de soutien (11) sont formés par un seul câble de traction commun (17).

9. Construction de toiture selon l'une des revendications précédentes, **caractérisée en ce que** les tronçons partiels (12) sont renforcés par des fibres, en particulier par un matériau de verre.

10. Construction de toiture selon l'une des revendications précédentes, **caractérisée en ce que** la peau de toiture (15) est réalisée sous forme de membrane, en particulier transparente.

11. Construction de toiture selon l'une des revendications précédentes, **caractérisée en ce que** le plancher de la construction de toiture (10) est formé par une surface de chargement (2) et par des tronçons d'un véhicule déployés vers l'extérieur au niveau de ladite surface, en particulier par des parois latérales (3) d'un véhicule poids-lourd (1).

12. Construction de toiture selon la revendication 11, **caractérisée par** une sous-structure (support de plancher 22) soutenant le plancher de la construction de toiture (10) approximativement au niveau de la surface de chargement (2) du véhicule.

13. Construction de toiture selon l'une des revendications précédentes, **caractérisée en ce que** lors d'une construction de toiture redressée (10), un haubanage intérieur est maintenu en suspension sur les arcs de soutien (11), en particulier sur les éléments d'écartement (19).

14. Véhicule, en particulier poids-lourd (1), comportant une surface de chargement (2) et une construction de toiture (10) recouvrant cette surface de chargement (2) dans l'état déplié, selon l'une des revendications précédentes.

15. Véhicule selon la revendication 14, **caractérisé en ce que** la construction de toiture (10) est repliable entre deux parois latérales (3) redressées, en particulier susceptibles d'être redressées, du véhicule.

16. Véhicule selon l'une ou l'autre des revendications 14 et 15, **caractérisé en ce que** les deux tronçons partiels extérieurs (12) d'un arc de soutien (11) sont articulés chacun sur des parties de plafond (Sa, 5b) qui sont articulées de façon mobile sur le véhicule, de préférence de façon rabattable.
